# EUROPEAN PATENT APPLICATION

(11) **EP 4 574 241 A1**
(43) Date of publication of application: **25.06.2025**
(21) Application number: 23307313.9
(22) Date of filing: 21.12.2023
(51) Int. Cl.: B01D 53/14

(54) **REPURPOSING HEATED CONDENSATE TO HEAT AN EXHAUST GAS OF A CARBON CAPTURE SYSTEM**

(71) Applicant: Technip Energies France, 92741 Nanterre Cedex (FR)
(72) Inventor: Schenk, Myrian, 92741 Nanterre Cedex (FR); Starr, James, 92741 Nanterre Cedex (FR); Stone, Andrew, 92741 Nanterre Cedex (FR)
(74) Representative: Edson, Russell Gregory

(57) **Abstract**

One example can include a carbon capture system that has an amine reboiler and a heat exchanger coupled to the amine reboiler. The heat exchanger can heat an exhaust gas from an absorber using a heated condensate from the amine reboiler.

## Description

### Technical Field

The present disclosure relates generally to carbon capture systems for capturing carbon dioxide in post-combustion flue gas downstream of industrial processes. More specifically, but not by way of limitation, this disclosure relates to a carbon capture system that can repurpose heated condensate generated by a piece of equipment (e.g., an amine reboiler) to heat an exhaust gas from an absorber of the carbon capture system.

### Background

Power plants, refineries, and other industrial facilities often generate carbon dioxide (CO₂) emissions as a byproduct of their primary industrial processes. If the CO₂ emissions are released into the environment, it can have negative environmental consequences. To help mitigate these environmental impacts, carbon capture techniques have been developed. Carbon capture techniques can be used to capture or "scrub" CO₂ from the byproduct emissions. Once captured, the CO₂ can then be stored or used in other processes.

In the context of power generation, power plants burn fossil fuels (e.g., gas or coal) to drive a turbine to generate electricity. Burning fossil fuels can generate flue gas, which is a combustion exhaust gas that may include CO₂ emissions as a byproduct. There are two main categories of carbon capture techniques used to reduce such CO₂ in flue gas: pre-combustion techniques and post-combustion techniques. Pre-combustion techniques trap CO₂ before the fossil fuels are burned, which can reduce the amount of downstream CO₂ in the flue gas. Post-combustion techniques trap CO₂ in the flue gas after the fossil fuels are burned.

Post-combustion techniques can be implemented by a carbon capture plant. A carbon capture plant includes a specialized arrangement of equipment that is designed to capture CO₂ in the flue gas output by an emitter, such as a power plant or another industrial facility. Examples of such specialized equipment can include blowers, absorbers, pumps, strippers, coolers, condensers, and filters. The carbon capture plant is attached to the emitter for receiving and scrubbing the flue gas.

### Summary

One example of the present disclosure includes a carbon capture system comprising an amine reboiler and a heat exchanger. The heat exchanger is coupled to the amine reboiler. The heat exchanger heats an exhaust gas from an absorber using a heated condensate from the amine reboiler.

One or more embodiments include the system of the previous paragraph, further comprising a stripper coupled to the amine reboiler, wherein the stripper receives an amine solution containing carbon dioxide from the absorber and separate the carbon dioxide from the amine solution.

One or more embodiments include the system of the previous paragraph, wherein the absorber receives a flue gas and applies the amine solution to the flue gas to remove the carbon dioxide from the flue gas and thereby generate the exhaust gas.

One or more embodiments include the system of the previous paragraph, wherein the heat exchanger generates a cooled condensate as a byproduct of heating the exhaust gas using the heated condensate, and wherein the heat exchanger transmits the cooled condensate to a cooling tower.

One or more embodiments include the system of the previous paragraph, wherein the cooling tower is positioned prior to the absorber for intercepting the flue gas before the flue gas enters the absorber, and wherein the cooling tower uses the cooled condensate to cool the flue gas before the flue gas enters the absorber.

One or more embodiments include the system of any previous paragraph, wherein the carbon capture system is coupled to a power generation system, and wherein the power generation system generates a flue gas as a byproduct of combusting a fossil fuel to generate electrical power.

One or more embodiments include the system of any previous paragraph, wherein the amine reboiler is configured to heat a stripper, and wherein the stripper removes carbon dioxide from an amine solution.

Another example of the present disclosure can include a system comprising a cooling tower to receive a flue gas from a source and cool the flue gas using a cooled condensate. The system also comprises an absorber to receive the cooled flue gas from the cooling tower and generate an exhaust gas having less carbon dioxide than the cooled flue gas. The system also comprises an amine reboiler to generate a heated condensate. The system also comprises a heat exchanger coupled to the amine reboiler and the absorber, wherein the heat exchanger is usable to: receive the heated condensate from the amine reboiler; generate the cooled condensate by heating the exhaust gas from the absorber using the heated condensate; and transmit the cooled condensate to the cooling tower.

One or more embodiments include the system of the previous paragraph, further comprising a stripper coupled to the amine reboiler, wherein the stripper receives an amine solution containing the carbon dioxide from the absorber and separates the carbon dioxide from the amine solution.

One or more embodiments include the system of any previous paragraph, wherein the absorber applies an amine solution to the cooled flue gas to remove the carbon dioxide from the flue gas.

One or more embodiments include the system of any previous paragraph, wherein the source is a power generation system, and wherien the power generation system generates the flue gas as a byproduct of combusting a fossil fuel to generate electrical power.

One or more embodiments include the system of any previous paragraph, wherein the amine reboiler heats a stripper usable to remove carbon dioxide from an amine solution.

Still another example of the present disclosure includes a method comprising generating, by an amine reboiler, a heated condensate. The method also comprises transmitting, from the amine reboiler, the heated condensate to a heat exchanger. The method also comprises heating, by the heat exchanger, an exhaust gas from an absorber using the heated condensate.

One or more embodiments include the method of the previous paragraph, further comprising receiving, by the absorber, a flue gas generated by a source; applying, by the absorber, an amine solution to the flue gas to remove carbon dioxide from the flue gas and thereby generate the exhaust gas; and transmitting, by the absorber, the exhaust gas to the heat exchanger.

One or more embodiments include the method of the previous paragraph, further comprising generating, by the heat exchanger, a cooled condensate as a byproduct of heating the exhaust gas using the heated condensate; and transmitting, by the heat exchanger, the cooled condensate to a cooling tower.

One or more embodiments include the method of the previous paragraph, further comprising cooling, by the cooling tower using the cooled condensate, the flue gas prior to the flue gas reaching the absorber.

One or more embodiments include the method of any previous paragraph, wherein the source is a power generation system, and the power generation system generates the flue gas as a byproduct of combusting a fossil fuel to generate electrical power.

One or more embodiments include the method of any previous paragraph, further comprising receiving, by a stripper coupled to the amine reboiler, the amine solution containing the carbon dioxide from the absorber; and separating, by the stripper, the carbon dioxide from the amine solution.

One or more embodiments include the method of any previous paragraph, wherein the amine reboiler, the heat exchanger, and the absorber are parts of a carbon capture system.

One or more embodiments include the method of any previous paragraph, wherein the amine reboiler is configured to heat a stripper usable to remove carbon dioxide from an amine solution.

### Brief Description of the Drawings

FIG. 1 is a block diagram of an example of a power generation system according to some aspects of the present disclosure.
FIG. 2 is a block diagram of an example of a carbon capture system according to some aspects of the present disclosure.
FIG. 3 is a block diagram of an example of a system for using heated condensate from an amine reboiler to heat an exhaust gas from an absorber according to some aspects of the present disclosure.
FIG. 4 is a block diagram of an example of a system for using heated condensate from a piece of equipment to heat an exhaust gas from an absorber of a carbon capture system according to some aspects of the present disclosure.
FIG. 5 is a flowchart of an example of a process for using heated condensate to heat an exhaust gas from an absorber according to some aspects of the present disclosure.

### Detailed Description

Certain aspects and features of the present disclosure relate to a carbon capture system that can use (e.g., repurpose) heated condensate generated by a piece of equipment to heat an exhaust gas from an absorber. More specifically, the carbon capture system can include an absorber that receives a flue gas output by a power plant or another emitter. The absorber can apply an amine solution to the flue gas to remove CO₂ from the flue gas, thereby generating a carbon-reduced exhaust gas that is vented from the absorber. The exhaust gas may then be released into the environment through a smoke stack. Normally, this exhaust gas has a lower temperature (e.g., 30-50°C) when it is released into the environment. But in some examples, the exhaust gas can be heated to a higher temperature before it is released into the environment. The exhaust gas can be heated using heated condensate from a piece of equipment in the carbon capture system, such as an amine reboiler. Although the piece of equipment may be primarily designed and configured to serve another purpose in the carbon capture system, in some examples the carbon capture system can repurpose the heated condensate from the piece of equipment to perform the additional function of heating the exhaust gas. Because the exhaust gas is heated using heated condensate that is already present in the carbon capture system, there may be little or no additional power consumed by the carbon capture system to heat the exhaust gas using this approach.

Heating the exhaust gas before it is released into the environment can provide a number of advantages. For example, heating the exhaust gas can increase the buoyancy of the exhaust gas so that, upon its release, it floats higher into the atmosphere before it begins to cool. This can reduce the environmental impact of the exhaust gas at ground level and help comply with regulatory requirements. Heating the exhaust gas can also increase the efficiency of the carbon capture system, for example by creating an artificial suction that draws more flue gas into the absorber. In some examples, up to 1 millibar of pressure may be recovered using these techniques.

In some examples, the exhaust gas can be heated via a heat exchanger that circulates the heated condensate proximate to the exhaust gas. Circulating the heated condensate near the exhaust gas can increase the temperature of the exhaust gas and decrease the temperature of the heated condensate through heat transfer. Decreasing the temperature of the heated condensate can yield a cooled condensate (relative to the heated condensate). In some examples, the cooled condensate can also be repurposed to help cool other equipment or gases. For example, the cooled condensate can be transmitted to a cooling tower positioned prior to the absorber in the carbon capture system. The cooling tower can then use the cooled condensate to help cool the flue gas before it enters the absorber. Using the cooled condensate to assist in the cooling functionality of the cooling tower can improve the energy efficiency of the cooling tower, which in this configuration may consume less electrical power to cool the flue gas. Conversely, without the cooled condensate, the cooling tower may need to consume a significant amount of electrical power to cool the flue gas.

These illustrative examples are given to introduce the reader to the general subject matter discussed here and are not intended to limit the scope of the disclosed concepts. The following sections describe various additional features and examples with reference to the drawings in which like numerals indicate like elements but, like the illustrative examples, should not be used to limit the present disclosure.

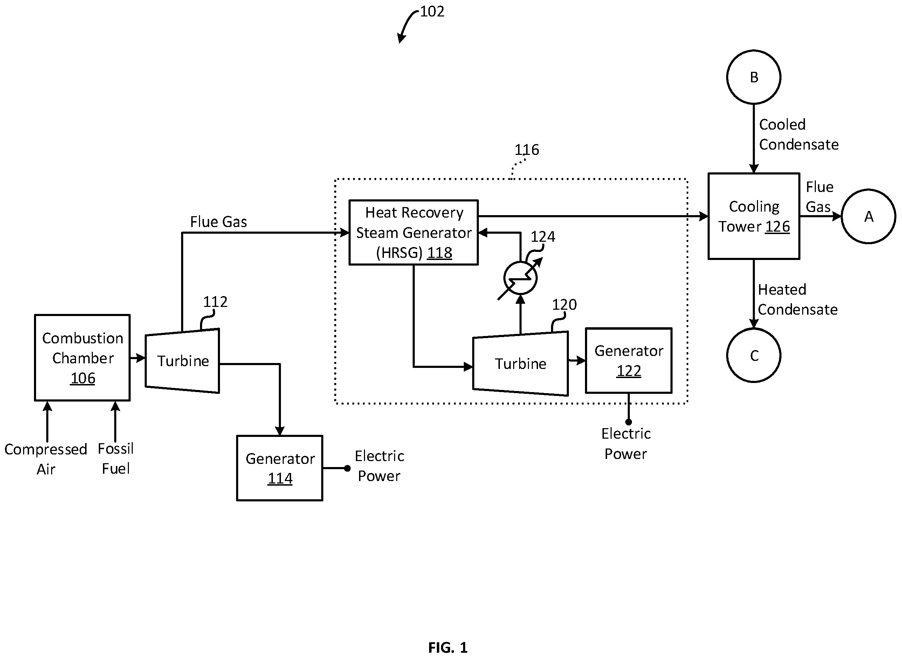

FIG. 1 is a block diagram of an example of a power generation system 102 according to some aspects of the present disclosure. The power generation system 102 can be part of a power plant, which is an industrial facility that includes the physical infrastructure for generating large-scale electrical power (e.g., for a power grid). The power generation system 102 can include a configuration of equipment for converting fossil fuels into electrical power. For example, the power generation system 102 can include a combustion chamber 106 for combusting fossil fuels to generate a flue gas that may be used to operate a turbine 112. Although the combustion chamber 106 is shown separately from the turbine 112, the combustion chamber 106 may be part of the turbine 112 in some examples. The flue gas can drive the turbine 112 (e.g., a gas turbine), which can have blades that rotate as the flue gas passes through the blades. The blades are connected to a shaft, so the shaft can also rotate as the blades rotate. The shaft can be connected to an electric generator 114, which can convert the mechanical rotation of the shaft into electric power. The power generation system 102 can also include other equipment, such as condensers and compressors, that are not shown in FIG. 1 for simplicity.

In some examples, the flue gas is transmitted to a carbon capture system for processing. The flue gas may be transmitted through other equipment 116 of the power generation system 102 prior to reaching the carbon capture system. For example, the flue gas can be transmitted through a heat recovery steam generator 118, which can be coupled to a secondary turbine 120, a secondary generator 122, and a condenser 124, among other components. These components may be arranged to extract additional energy from the flue gas and convert it to additional electric power. For instance, the HRSG 118 can recover heat from the flue gas and use the heat to produce steam, which can drive the secondary turbine 120 and the secondary generator 122 to generate the additional electric power.

In some examples, the flue gas is transmitted through a cooling tower 126. The cooling tower 126 may be any device usable to cool the flue gas, such as a direct contact cooling unit in which there is direct contact between the flue gas and the circulating condensate loop, a heat exchanger (e.g., that does not operate via direct contact with the flue gas), or a duct and pipe system. The cooling tower 126 can be considered part of the power generation system 102 or the carbon capture system. The cooling tower 126 can be positioned in a flow path for the flue gas, where the flow path extends from the combustion chamber 106 associated with the turbine 112 to an absorber of the carbon capture system. The cooling tower 126 can be positioned in the flow path prior to an inlet of the absorber to cool the flue gas to a temperature level that is suitable for the absorber. Once cooled, the flue gas can be processed by the absorber to extract CO₂ or other pollutants from the flue gas.

The cooling tower 126 may at least partially cool the flue gas using cooled condensate. The cooled condensate can be provided by a heat exchanger of the carbon capture system. The heat exchanger can be coupled to the cooling tower 126, the absorber, and another piece of equipment (e.g., an amine reboiler) in the carbon capture system. The heat exchanger can receive a heated condensate from the other piece of equipment and use the heated condensate to cool an exhaust gas output by the absorber. This heat transfer may increase the temperature of the exhaust gas from a baseline level to a higher level. This heat transfer also simultaneously cools the heated condensate, thereby transforming the heated condensate into the cooled condensate. The cooled condensate can then be provided from the heat exchanger to the cooling tower 126, which can circulate the cooled condensate proximate to the flue gas to cool the flue gas. Circulating the cooled condensate proximate to the flue gas may also increase the temperature of the cooled condensate, thereby converting the cooled condensate into a heated condensate. The cooling tower 126 can then transmit the heated condensate for reuse by the original piece of equipment or for use by other equipment of the carbon capture system.

Additionally or alternatively, the cooled condensate may be used by other equipment in the power generation system 102, other than the cooling tower 126. For example, the cooled condensate may be provided to a heat exchanger of the power generation system 102, where the heat exchanger is different than the cooling tower 126 for the flue gas. The heat exchanger may circulate the cooled condensate proximate to a gas or a piece of equipment in the power generation system 102 to cool it. This circulation may also increase the temperature of the cooled condensate, thereby converting the cooled condensate into a heated condensate. The heat exchanger can then transmit the heated condensate back to the carbon capture system (e.g., for reuse as described above). Thus, the techniques described herein are not limited to use with the cooling tower 126.

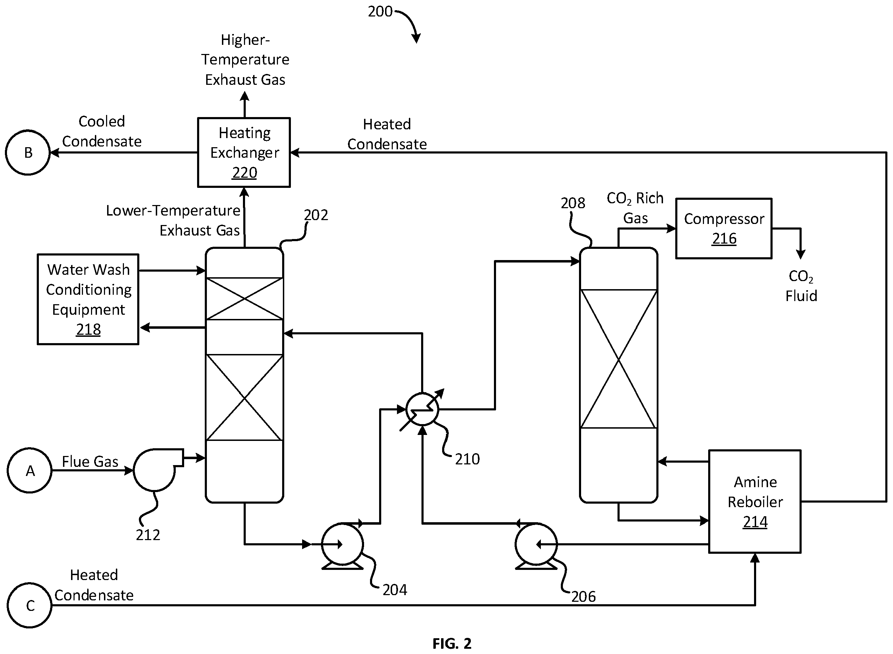

More details about the carbon capture system will now be described with respect to FIG. 2. As shown, the carbon capture system 200 can include a blower 212 positioned in a flow path (e.g., one or more conduits) for the flue gas, where the flow path is for transmitting the flue gas to an absorber 202. The blower 212 can increase the pressure level of the flue gas to a suitable level for use with the absorber 202. The absorber 202 can receive the flue gas at the inlet. When the flue gas enters the inlet of the absorber 202, it may be more than 3% CO₂ and in some cases more than 25% CO₂. After going through the carbon capture process, the flue gas may be less than 2% CO₂.

In some examples, the carbon capture system 200 may include different or additional equipment in the flow path prior to the absorber 202. The equipment can interact with the flue gas before it reaches the absorber 202. For example, as discussed above, the carbon capture system 200 can include a cooling tower (e.g., cooling tower 126) in the flow path and prior to the inlet of the absorber 202. The cooling tower can reduce the temperature of the flue gas to a suitable level for use with the absorber 202.

After receiving the flue gas, the absorber 202 can transport the flue gas through a solution that contains amines. The CO₂ in the flue gas can bind with the amines to create carbon-reduced (e.g., carbon-free) flue gas. More specifically, the absorption process can make use of the reversable nature of the chemical reaction of an aqueous alkaline solvent, usually an amine, with an acid or sour gas. At the absorber 202, which can typically have temperatures of 40-60°C, the CO₂ is bound by the chemical amine solvent. The flue gas may then undergo a water wash section to balance water in the system and to remove any solvent droplets or solvent vapor carried over, before leaving the absorber. The carbon-reduced flue gas can be vented from the absorber 202 as exhaust gas. Next, the CO₂-rich amine solution can be transmitted to a stripper 208, at which point the amine solution can be heated or reboiled with steam or another heat source. Again, making use of the reversable nature of the chemical reaction, the high temperatures in the stripper 208 can separate the CO₂ from the amine, thereby producing a CO₂ stream that is relatively pure. In some cases, the stripper 208 may apply heat of 100-140°C. The stripper 208 may have an internal pressure at or around that of atmospheric pressure. The resulting CO₂ stream may be referred to herein as a CO₂ rich gas. The amine solution can then be returned to the absorber 202 for reuse. The CO₂ rich gas can continue to a compressor 216, which can turn it into a liquid. The liquid can then be piped or shipped to its final destination, for example to be sold or buried safely underground.

To effectuate the above process, the carbon capture system 200 can include various additional pieces of equipment. Some of this equipment is shown in FIG. 2, though not all such equipment is shown for simplicity. As shown, the carbon capture system 200 can include a first pump 204 to pump the amine-rich solution to the stripper 208, a second pump 206 to pump the amine-lean solution back to the absorber 202, and an exchanger 210 to facilitate this transfer of amine solution. The first pump 204 and the second pump 206 can be coupled to the exchanger 210, which in turn can be coupled to the absorber 202 and the stripper 208. Other components, such as a filter, may also be positioned between exchanger 210 and the absorber 202 to facilitate this process.

In some examples, the carbon capture system 200 may also include an amine reboiler 214 and water wash conditioning equipment 218. The amine reboiler 214 can provide heat to the stripper 208 to remove CO₂ from the amine solution, so that the amine solution can be reused in the absorber 202. The water wash conditioning equipment 218 can correspond to a water wash section of the absorber 202. As noted earlier, the water wash section can be configured to water wash the flue gas after CO₂ absorption to reduce solvent emissions. The water wash conditioning equipment 218 can include a pump and a cooler (e.g., a heat exchanger), which can be connected together to perform these functions.

In some examples, the amine reboiler 214 can generate heated condensate as a byproduct of its operations. The heated condensate may be in excess of 100°C. The amine reboiler 214 can be coupled to a heat exchanger 220 via one or more conduits for transmitting the heated condensate to the heat exchanger 220. The heat exchanger 220 can be positioned in a flow path between an outlet of the absorber 202 and an exhaust stack. The heat exchanger 220 can receive and use the heated condensate to heat the exhaust gas output by the absorber 202. In some examples, the heated condensate may increase the temperature of the exhaust gas by 20°C or more. The process of heating the exhaust gas may transform the heated condensate into a cooled condensate, which can then be provided to a cooling tower for cooling the flue gas, as described above. As the cooling tower cools the flue gas, the cooled condensate may be transformed back into a heated condensate, which can be provided back to the amine reboiler 214 (or another component of the carbon capture system 200 or power plant 102) for subsequent use.

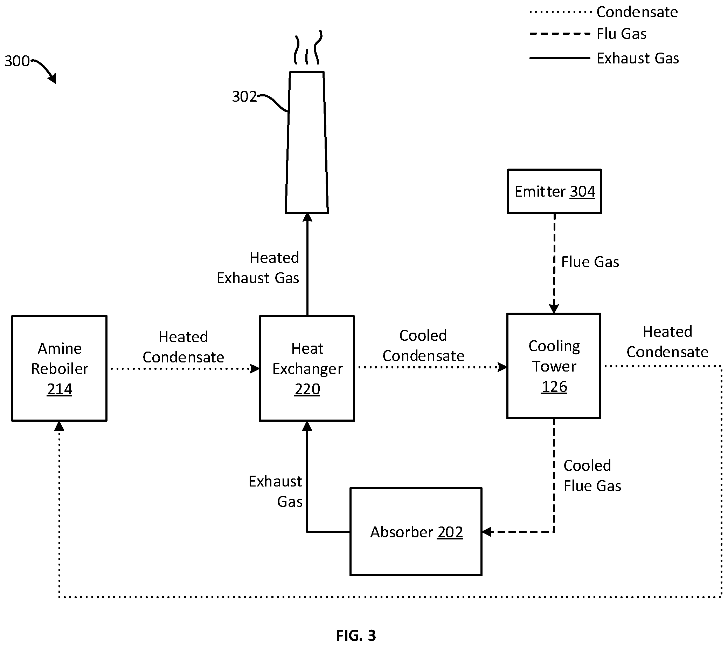

Turning now to FIG. 3, shown is a block diagram of an example of a system 300 for using heated condensate from an amine reboiler 214 to heat an exhaust gas from an absorber 202 according to some aspects of the present disclosure. As shown, an emitter 304 can generate flue gas and provide it to a cooling tower 126, where it is cooled using cooled condensate. The cooled flue gas can then enter an absorber 202 that is coupled to the cooling tower 126. The absorber 202 can remove carbon dioxide or another gaseous pollutant from the flue gas to generate an exhaust gas. The exhaust gas can be provided to a heat exchanger 220 that is coupled between the absorber 202 and an exhaust stack 302. The exhaust gas can be heated by the heat exchanger 220, so that when the exhaust gas leaves the heat exchanger 220, it is of a higher temperature than when it left the absorber 202. The heated exhaust gas can then be emitted into the environment via the exhaust stack 302.

In some examples, the heat exchanger 220 can heat the exhaust gas using heated condensate from an amine reboiler 214. The amine reboiler 214 can be coupled to the heat exchanger 220 for supplying the heated condensate to the heat exchanger 220. The amine reboiler 214 can generate heated condensate as a byproduct of its operations. The heat exchanger 220 can use the heated condensate to heat the exhaust gas output by the absorber 202. Through this heat transfer, the heated condensate may be cooled to produce the cooled condensate, which is provided to the cooling tower 126 for cooling the flue gas. In some cases the cooled condensate may still be relatively warm, such as 10-20°C warmer than the heated exhaust gas.

As the cooling tower 126 cools the flue gas, the cooled condensate may be transformed back into a heated condensate. The heated condensate can be provided back to the amine reboiler 214 for subsequent use. This process can iterate, with the condensate from the amine reboiler 214 going through multiple heating and cooling cycles as it circulates through the system 300.

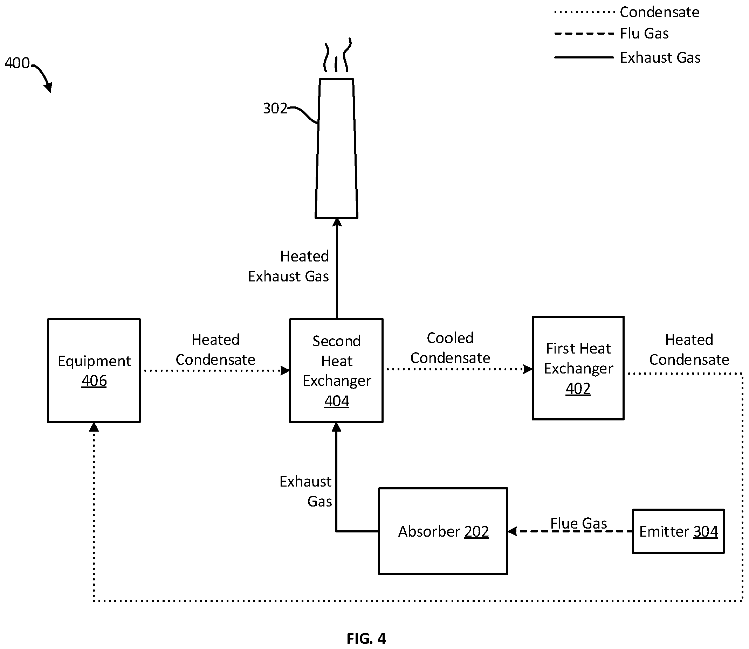

FIG. 4 is a block diagram of an example of a system 400 for using heated condensate from a piece of equipment 406 to heat an exhaust gas from an absorber 202 of a carbon capture system according to some aspects of the present disclosure. As shown, an emitter 304 can generate a flue gas and provide it to an absorber 202. Prior to reaching the absorber 202, the flue gas may be transmitted through one or more other pieces of equipment. This other equipment may be part of the emitter's system (e.g., a power generation system), a carbon capture system, or both. One example of such equipment can be a first heat exchanger 402. The first heat exchanger 402 may be positioned within a flow path of the flue gas, where the flow path may extend from a combustion chamber to the absorber 202. In some such examples, the first heat exchanger 402 may be used to cool the flue gas prior to the flue gas reaching the absorber 202. Alternatively, as shown in FIG. 4, the first heat exchanger 402 may be positioned outside the flow path of the flue gas. In some such examples, the first heat exchanger 402 may serve a different purpose than cooling the flue gas. For example, the first heat exchanger 402 may be used to cool another gas or a piece of equipment in a power generation system.

The absorber 202 can receive the flue gas and remove a pollutant such as carbon dioxide from the flue gas. This can produce an exhaust gas that has a significantly lower level of the pollutant than the input flue gas. The exhaust gas can then be provided to a second heat exchanger 404 (e.g., heat exchanger 220 of FIG. 2), which is coupled between the absorber 202 and an exhaust stack 302. The second heat exchanger 404 can heat the exhaust gas to a higher temperature than when the exhaust gas left the absorber 202. The heated exhaust gas can then be emitted into the environment via the exhaust stack 302.

The second heat exchanger 404 can heat the exhaust gas using heated condensate from a piece of equipment 406, such as an amine reboiler 214. The piece of equipment 406 may be part of the carbon capture system or the emitter 304 (e.g., a power plant). The piece of equipment 406 can be coupled to the second heat exchanger 404 for supplying the heated condensate to the second heat exchanger 404. The piece of equipment 406 can be primarily designed for performing a function other than generating the heated condensate and may generate the heated condensate as a byproduct of its primary functionality.

The process of heating the exhaust gas using the heated condensate may simultaneously cool the condensate, thereby producing a cooled condensate. The second heat exchanger 404 can then provide the cooled condensate to the first heat exchanger 402. The first heat exchanger 402 can circulate the cooled condensate near a fluid (e.g., a gas or liquid) or a piece of equipment to cool it. In some examples, the fluid may include the flue gas. The circulation of the cooled condensate by the first heat exchanger 402 can transform the cooled condensate back into a heated condensate. The heated condensate may then be provided back to the piece of equipment 406 and this process can iterate, with the condensate going through multiple heating and cooling cycles as it circulates through the system 400. Although this example involves a first heat exchanger 402, in other examples the first heat exchanger 402 may be replaced with cooling tower containing any kind of cooling device.

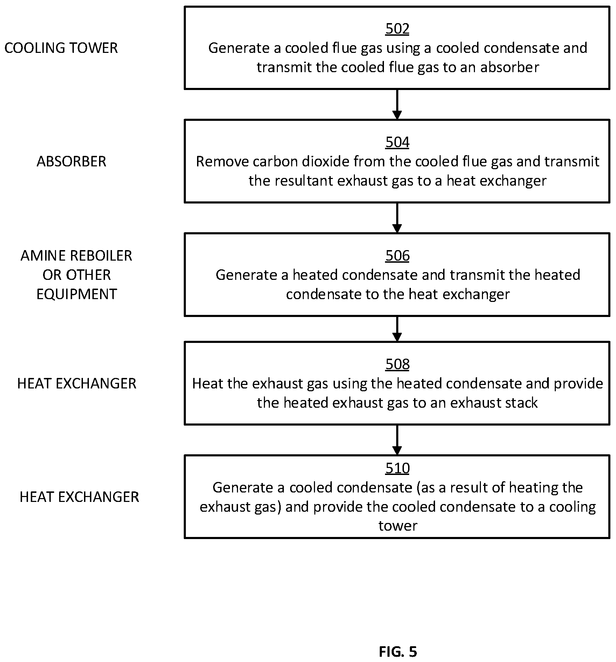

FIG. 5 is a flowchart of an example of a process for using heated condensate to heat an exhaust gas from an absorber according to some aspects of the present disclosure. Other examples may include more steps, fewer steps, different steps, or a different sequence of steps than is shown. And in some examples, some of the steps may be performed in parallel to one another. The steps of FIG. 5 will now be described below with reference to the components of FIGS. 1-4 described above.

In block 502, a cooling tower 126 cools a flue gas to produce a cooled flue gas. The cooling tower 126 can cool the flue gas using a cooled condensate. The cooling tower 126 can then transmit the cooled flue gas to an absorber 202 (e.g., via a blower 212 or another component) of a carbon capture system 200. The cooling tower 126 can be coupled to the absorber 202 through one or more conduits for transmitting the flue gas to the absorber 202. In alternative examples, the system may lack the cooling tower 126, in which case the flue gas may not be cooled before being provided to the absorber 202 and this step may be skipped.

In block 504, the absorber 202 removes carbon dioxide or another pollutant from the flue gas (e.g., the cooled flue gas). The absorber 202 may use an amine solution to remove the carbon dioxide or another pollutant from the flue gas. The absorber 202 can transmit the resultant exhaust gas to a heat exchanger (e.g., the heat exchanger 220 or the second heat exchanger 404). The absorber 202 can be coupled to the heat exchanger through one or more conduits for transmitting the exhaust gas to the heat exchanger.

In block 506, an amine reboiler 214 or other equipment 406 generates a heated condensate and transmits the heated condensate to the heat exchanger. The amine reboiler 214 or other equipment 406 can be coupled to the heat exchanger through one or more conduits for transmitting the heated condensate to the heat exchanger.

In block 508, the heat exchanger heats the exhaust gas from the absorber 202 using the heated condensate. Heating the exhaust gas using the heated condensate can produce a heated exhaust gas. The heat exchanger can be coupled to an exhaust stack 302 through one or more conduits. Through this connection, the heat exchanger can provide the heated exhaust gas to the exhaust stack 302 for emission into the external environment.

In block 510, the heat exchanger generates a cooled condensate as a result of heating the exhaust gas. The heat exchanger can then provide the cooled condensate to the cooling tower 126 (e.g., for use in cooling the flue gas). The heat exchanger can be coupled to the cooling tower 126 through one or more conduits for providing the cooled condensate to the cooling tower 126. Alternatively, in examples that lack the cooling tower 126, the cooled condensate may be transmitted from the heat exchanger to another component of the system, such as back to the amine reboiler 214 or other equipment 406.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure. For instance, any examples described herein can be combined with any other examples to yield further examples.

## Claims

1. A carbon capture system comprising:
an amine reboiler; and
a heat exchanger coupled to the amine reboiler, wherein the heat exchanger heats an exhaust gas from an absorber using a heated condensate from the amine reboiler;
optionally, wherein the carbon capture system is coupled to a power generation system, and wherein the power generation system generates a flue gas as a byproduct of combusting a fossil fuel to generate electrical power.

2. The carbon capture system of claim 1, further comprising a stripper coupled to the amine reboiler, wherein the stripper receives an amine solution containing carbon dioxide from the absorber and separates the carbon dioxide from the amine solution; optionally, wherein the absorber receives a flue gas and applies the amine solution to the flue gas to remove the carbon dioxide from the flue gas and thereby generate the exhaust gas.

3. The carbon capture system of any preceding claim, wherein the heat exchanger generates a cooled condensate as a byproduct of heating the exhaust gas using the heated condensate, and wherein the heat exchanger transmits the cooled condensate to a cooling tower; optionally, wherein the cooling tower is positioned prior to the absorber for intercepting the flue gas before the flue gas enters the absorber, and wherein the cooling tower uses the cooled condensate to cool the flue gas before the flue gas enters the absorber.

4. The carbon capture system of claim 1, wherein the amine reboiler heats a stripper, and the stripper removes carbon dioxide from an amine solution.

5. A system comprising:
a cooling tower to receive a flue gas from a source and cool the flue gas using a cooled condensate;
an absorber to receive the cooled flue gas from the cooling tower and generate an exhaust gas having less carbon dioxide than the cooled flue gas;
an amine reboiler to generate a heated condensate; and
a heat exchanger coupled to the amine reboiler and the absorber, the heat exchanger being usable to:
receive the heated condensate from the amine reboiler;
generate the cooled condensate by heating the exhaust gas from the absorber using the heated condensate; and
transmit the cooled condensate to the cooling tower;
optionally, wherein the source is a power generation system, the power generation system being usable to generate the flue gas as a byproduct of combusting a fossil fuel to generate electrical power.

6. The system of claim 5, further comprising a stripper coupled to the amine reboiler, the stripper being usable to receive an amine solution containing the carbon dioxide from the absorber and separate the carbon dioxide from the amine solution.

7. The system of claim 5, wherein the absorber is usable to apply an amine solution to the cooled flue gas to remove the carbon dioxide from the flue gas.

8. The system of claim 5, wherein the amine reboiler is usable to heat a stripper usable to remove carbon dioxide from an amine solution.

9. A method comprising:
generating, by an amine reboiler, a heated condensate;
transmitting, from the amine reboiler, the heated condensate to a heat exchanger; and
heating, by the heat exchanger, an exhaust gas from an absorber using the heated condensate.

10. The method of claim 9, further comprising:
receiving, by the absorber, a flue gas generated by a source;
applying, by the absorber, an amine solution to the flue gas to remove carbon dioxide from the flue gas and thereby generate the exhaust gas; and
transmitting, by the absorber, the exhaust gas to the heat exchanger.

11. The method of claim 10, further comprising:
generating, by the heat exchanger, a cooled condensate as a byproduct of heating the exhaust gas using the heated condensate; and
transmitting, by the heat exchanger, the cooled condensate to a cooling tower; optionally, further comprising:
cooling, by the cooling tower using the cooled condensate, the flue gas prior to the flue gas reaching the absorber.

12. The method of claim 10, wherein the source is a power generation system, and the power generation system generates the flue gas as a byproduct of combusting a fossil fuel to generate electrical power.

13. The method of claim 10, further comprising:
receiving, by a stripper coupled to the amine reboiler, the amine solution containing the carbon dioxide from the absorber; and
separating, by the stripper, the carbon dioxide from the amine solution.

14. The method of claim 9, wherein the amine reboiler, the heat exchanger, and the absorber are parts of a carbon capture system.

15. The method of claim 9, wherein the amine reboiler heats a stripper that removes carbon dioxide from an amine solution.
